# EUROPEAN PATENT APPLICATION

(11) **EP 3 190 508 A1**
(43) Date of publication of application: **12.07.2017**
(21) Application number: 17150140.6
(22) Date of filing: 03.01.2017
(51) Int. Cl.: G06F 3/06, G06F 21/79

(54) **ELECTRONIC DEVICE, METHOD FOR CONTROLLING THE SAME, AND CARRIER MEANS**

(30) Priority: 07.01.2016 JP 2016001574; 12.10.2016 JP 2016201184
(71) Applicant: Ricoh Company, Ltd., Tokyo 143-8555 (JP)
(72) Inventor: SHUTOH, Norihiko, Tokyo, 143-8555 (JP); NANGOH, Tomohiro, Tokyo, 143-8555 (JP)
(74) Representative: Schwabe - Sandmair - Marx

(57) **Abstract**

An electronic device (1) includes: a solid state drive (SSD) (14) including a memory (14B) and a first controller (14A), the first controller being an SSD controller that controls the SSD; and a second controller (11) to control operation of the electronic device. In response to an instruction for writing data in the memory (14B) of the SSD (14), the second controller (11) determines whether the data is to be erased by executing a complete erasing process instead of a normal erasing process. Based on a determination indicating that the data is to be erased by the complete erasing process, the second controller (11) adds to-be-completely-erased information to the data and instructs the first controller (14A) to write the data added with the to-be-completely-erased information in the memory (14B) of the SSD (14). In response to an instruction for erasing data from the memory (14B) of the SSD (14), the first controller (14A) determines whether the data is added with to-be-completely-erased information. The first controller (14A) erases the data and management information of the data by executing the complete erasing process when the data is added with the to-be-completely-erased information, and erases the management information of the data by executing the normal easing process when the data is not added with the to-be-completely-erased information.

## Description

### BACKGROUND

### Technical Field.

The present invention relates to an electronic device, a method for controlling the same, and carrier means.

### Description of the Related Art.

In large embedded devices such as MPFs, hard disk drives (HDDs) are used for storing a large amount of data. HDDs store various types of data. To prevent data leakage, data needs to be completely erased after being used. A general technique for completely erasing data on HDDs involves, for example, overwriting of the data with other data.

In place of HDDs, solid state drives (SSDs) that include non-volatile memories such as flash memories are used in recent years. Data on SSDs cannot be completely erased by using the same technique as that used in HDDs (the technique of overwriting data with other data). To completely erase data on SSDs, it has been generally known to use the "Secure Erase command" or the "Trim comman0d".

Normally, however, the hitherto use of the "Secure Erase command" or the "Trim command" completely erases all the data. If data that does not need to be completely erased is completely erased, performance is lowered.

Therefore, a method for collectively storing to-be-completely-erased data in a certain area (such as a partition) and completely erasing only that area is known. This method involves in-advance securing of a to-be-erased area and a not-to-be-erased area. This lowers the efficiency of area usage, resulting in the waste of areas. For example, Japanese Patent Application Publication No. 2010-176398 previously secures an area for storing data subject to erasing, such that a memory area is not effectively used.

### SUMMARY

Embodiments of the present invention include an electronic device, a method performed by the electronic device, and carrier means such as a recording medium storing a program for controlling the electronic device. The electronic device includes: a solid state drive (SSD) including a memory and a first controller, the first controller being an SSD controller that controls the SSD; and a second controller to control operation of the electronic device. In response to an instruction for writing data in the memory of the SSD, the second controller determines whether the data is to be erased by executing a complete erasing process instead of a normal erasing process. Based on a determination indicating that the data is to be erased by the complete erasing process, the second controller adds to-be-completely-erased information to the data and instructs the first controller to write the data added with the to-be-completely-erased information in the memory of the SSD. In response to an instruction for erasing data from the memory of the SSD, the first controller determines whether the data is added with to-be-completely-erased information. The first controller erases the data and management information of the data by executing the complete erasing process when the data is added with the to-be-completely-erased information. The first controller erases the management information of the data by executing the normal easing process when the data is not added with the to-be-completely-erased information.

Since whether to execute complete erasing is set for each item of data, it is not necessary to secure in advance a to-be-erased area. This results in enhanced efficiency of area usage of the memory and prevention of the waste of areas in the memory.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating the hardware configuration of an MFP according to an embodiment of the present invention;
FIG. 2 is a block diagram illustrating the functional configuration of a central processing unit (CPU) and an SSD controller in the MPF illustrated in FIG. 1;
FIG. 3 is a flowchart illustrating a data writing process executed by the CPU illustrated in FIGs. 1 and 2;
FIGs. 4A and 4B (FIG. 4) is a flowchart illustrating a data erasing process executed by the SSD controller illustrated in FIGs. 1 and 2; and
FIG. 5 is an illustration of the format of "to-be-completely-erased information" added to data in step S4 of FIG. 3.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, an embodiment of the present invention will be described with reference to the drawings. In the following embodiment, like symbols denote like components.

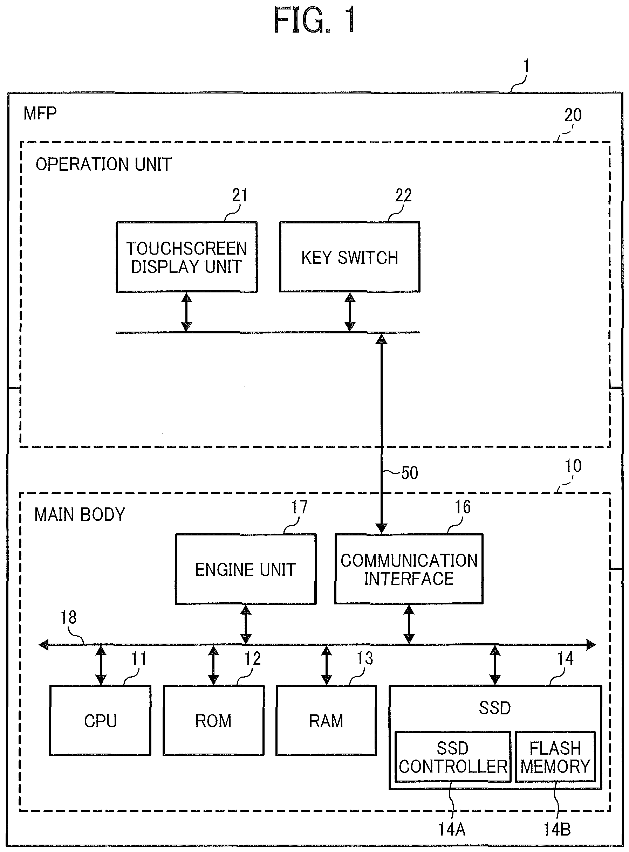

FIG. 1 is a block diagram illustrating the hardware configuration of an MFP 1 according to the embodiment of the present invention. Referring to FIG. 1, the MFP 1, which is an example of an electronic device, includes a main body 10 and an operation unit 20. The main body 10 includes a CPU 11, a read-only memory (ROM) 12, a random-access memory (RAM) 13, an SSD 14, a communication interface 16, and an engine unit 17. These components 11 to 17 are connected to one another via a bus 18. The SSD 14 includes an SSD controller 14A and a flash memory 14B. The operation unit 20 includes a touchscreen display unit 21 and a key switch 22.

In the embodiment, in the case of completely erasing data on the SSD 14, it is determined whether the data is to-be-completely-erased data. When the data is to-be-completely-erased data, the data is completely erased. When the data is not to-be-completely-erased data, a normal erasing process (normally, data itself on a memory medium of the flash memory 14B is not erased, but a data destination (management information) indicated by a file system is erased) is executed. In short, because whether to execute complete erasing is set for each item of data, it is not necessary to secure in advance a to-be-erased area. This results in enhanced efficiency of area usage and prevention of the waste of areas.

Referring to FIG. 1, the MFP 1 includes the main body 10, which is capable of realizing various functions including a copy function, a scanner function, a facsimile function, and a printer function, and the operation unit 20, which receives operations performed by a user. The main body 10 and the operation unit 20 are connected to be able to communicate with each other through a dedicated communication path 50. The communication path 50 may include, for example, one that conforms to the Universal Serial Bus (USB) standard. The communication path 50 may be wired or wireless, and may be any network that conforms to any desired standard.

The main body 10 operates in accordance with an operation received by the operation unit 20. The main body 10 communicates with an external device such as a client personal computer (PC), and operates in accordance with an instruction received from the external device.

The CPU 11 is a controller that controls the overall operation of the main body 10. The CPU 11 uses the RAM 13 as a work area and executes a program stored on the ROM 12 or the SSD 14, thereby controlling the operation of the entire main body 10 to realize various functions including the above-mentioned copy function, scanner function, facsimile function, and printer function. The communication interface 16 is an interface for communicating with the operation unit 20 through the communication path 50, such as a network interface circuit.

The SSD controller 14A of the SSD 14 is a controller that controls operation of the flash memory 14B. The SSD controller 14A receives a control instruction signal and data from the CPU 11 and executes the following process for the flash memory 14B. The flash memory 14B includes an area where data is written and an area where management information for managing an address at which that data is written is stored. Writing or erasing of the data and information is done by the SSD controller 14A.
(1) information adding process: add and store management information regarding the received data on the flash memory 14B;
(2) data writing process: store the received data on the flash memory 14B;
(3) complete erasing process: erase data itself on the memory medium of the flash memory 14B, and also erase the data destination (management information) indicated by the file system; and
(4) normal erasing process: erase the data destination (management information) indicated by the file system without erasing data itself on the memory medium of the flash memory 14B.

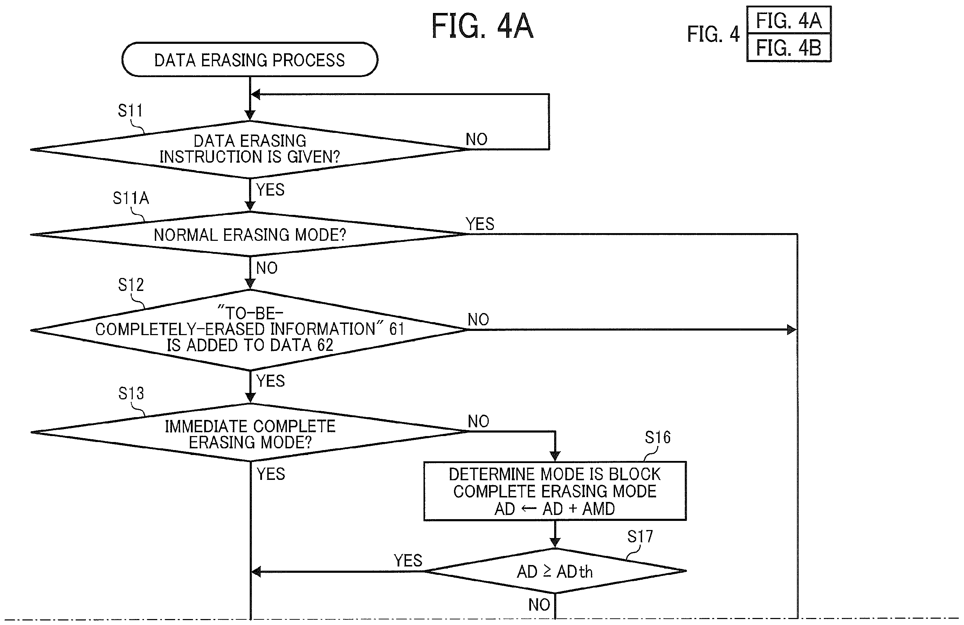

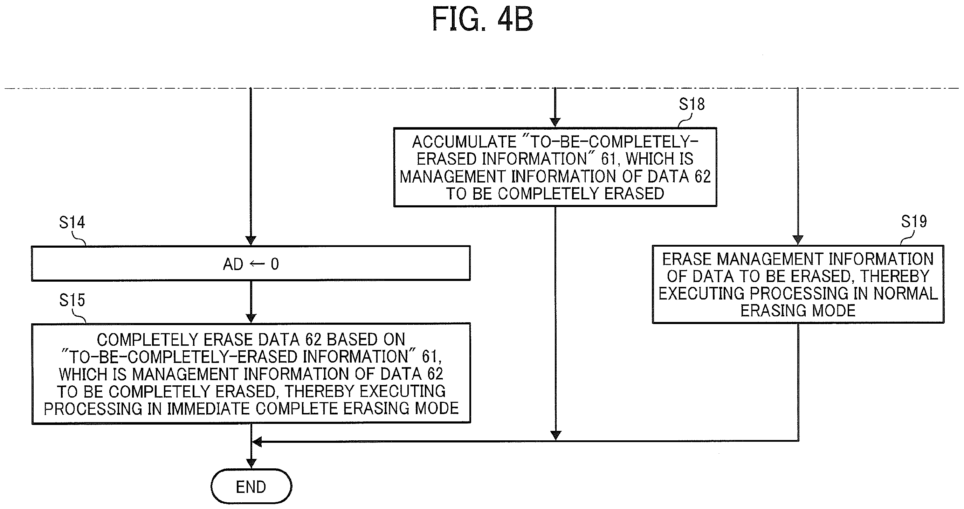

For complete erasing of data on the flash memory 14B, the CPU11 sets the following two complete erasing modes for the SSD controller 14A:
(1) immediate complete erasing mode: when "to-be-completely-erased information" 61 is added to data, the data is immediately completely erased; and
(2) block complete erasing mode: when "to-be-completely-erased information" 61 is added to data, if a to-be-completely-erased data cumulative amount AD exceeds a threshold ADth, the data is completely erased (steps S17, S14, and S15 of FIG. 4). Until then, the to-be-completely-erased data amount (cumulative amount) AD is calculated, and management information of the to-be-completely-erased data is accumulated (step S18 of FIG. 4).

The engine unit 17 is hardware that performs processing other than general information processing and communication, in order to realize the copy function, scanner function, facsimile function, and printer function. The engine unit 17 includes a scanner (image reading unit) that scans and reads an image of a document, a plotter (image forming unit) that performs printing on a sheet material such as paper, and a facsimile unit that performs facsimile communication. The engine unit 17 may further include a finisher that sorts the printed sheet materials, and a particular option such as an automatic document feeder (ADF) that automatically feeds a document.

Still referring to FIG. 1, the operation unit 20 includes the touch screen display unit 21 and the key switch 22. The touch screen display unit 21 is implemented by a display, such as a liquid crystal display (LCD), with the touch-panel screen, to display various information to the user or receive a user input. The key switch 22 is any hardware that receives a user input such as a key, button, switch, etc. provided on a surface of the operation unit 20. In addition to the touch screen display unit 21 and the key switch 22, the operation unit may include a communication interface to communicate with the main body 10, a controller such as a CPU, and a memory as a work area for the CPU.

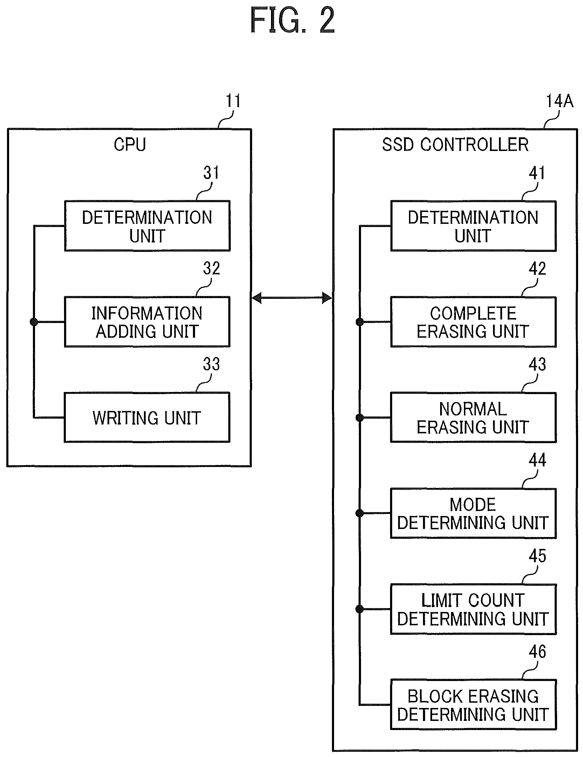

FIG. 2 is a block diagram illustrating the functional configuration of the CPU 11 and the SSD controller 14A in the MFP 1 illustrated in FIG. 1. Referring to FIG. 2, the CPU 11 includes a determination unit 31, an information adding unit 32, and a writing unit 33, each of which is implemented by the CPU 11 according to a control program stored in the memory. The SSD controller 14A includes a determination unit 41, a complete erasing unit 42, a normal erasing unit 43, a mode determining unit 44, a limit count determining unit 45, and a block erasing determining unit 46, each of which is implemented by the SSD controller 14A according to a control program stored in the memory.

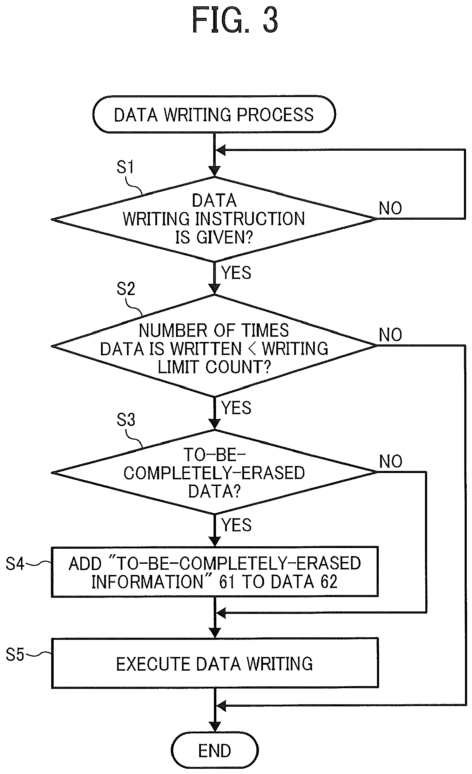

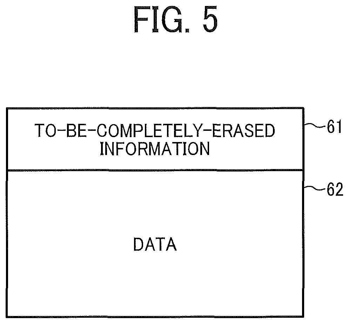

In the CPU 11 illustrated in FIG. 2, the determination unit 31 determines whether data 62 (FIG. 5) is to-be-completely-erased data (S3 of FIG. 3). As described below referring to FIG. 3, the data 62 is any data to be written according to a user instruction. When the data 62 is to-be-completely-erased data, the information adding unit 32 adds to-be-completely-erased information 61 to the data 62 (S4 of FIG. 3, and FIG. 5). The writing unit 33 instructs the SSD controller 14A to execute data writing (S5 of FIG. 3).

In the SSD controller 14A illustrated in FIG. 2, the determination unit 41 determines whether the data 62 is to-be-completely-erased data (S12 of FIG. 4). When the data 62 is to-be-completely-erased data, the complete erasing unit 42 completely erases the data 62 (S 15 of FIG. 4). When the data 62 is not to-be-completely-erased data, the normal erasing unit 43 executes processing of the data 62 in the normal erasing mode (S19 of FIG. 4). The mode determining unit 44 determines the erasing mode on the basis of setting information stored on the flash memory 14B (S11A and S 13 of FIG. 4). The limit count determining unit 45 determines whether the number of times data is written to the SSD 14 exceeds a writing limit count of the SSD 14 on the basis of information stored on the flash memory 14B (S2 of FIG. 3). The block erasing determining unit 46 determines whether the "block complete erasing mode" is set. The data amount AMD of to-be-completely-erased data this time is added to the to-be-completely-erased data cumulative amount AD, and the added result serves as the to-be-completely-erased data cumulative amount AD. The block erasing determining unit 46 determines whether the to-be-completely-erased data cumulative amount AD is greater than or equal to a certain threshold ADth (such as 1 GB) (S16 and S17 of FIG. 4).

FIG. 3 is a flowchart illustrating a data writing process executed by the CPU 11 illustrated in FIGs. 1 and 2.

In step S1 of FIG. 3, a user gives an instruction to write data 62 using the operation unit 20. The CPU 11 determines whether the CPU 11 is given the instruction for writing data 62. If the determination is YES, the process proceeds to step S2; and if the determination is NO, the process returns to step S1. In step S2, the CPU 11 determines whether the number of times data is written to the SSD 14 is less than a writing limit count of the SSD (the writing limit count is the number of times at which the flash memory 14B comes to the end of its life and data cannot be written any more). If the determination is YES, the process proceeds to step S3; and if the determination is NO, the data writing process ends. In the processing in step S2, the CPU 11 asks the SSD controller 14A whether the number of times data is written to the SSD 14 is less than the writing limit count of the SSD 14. The flash memory 14B stores the writing limit count and the cumulative number of times data is written so far. Therefore, when the SSD controller 14A is asked by the CPU 11 whether the number of times data is written to the SSD 14 is less than the writing limit count of the SSD 14, the SSD controller 14A performs this determination on the basis of the writing limit count and the cumulative number of times data is written, and informs the CPU 11 of the determination result. Accordingly, the CPU 11 can determine whether the number of times data is written is less than the writing limit count.

In step S3, the CPU 11 determines whether the data 62 is to-be-completely-erased data. If the determination is YES, the process proceeds to step S4; and if the determination is NO, the operation proceeds to S5. In the processing in step S3, the CPU 11 determines whether the data 62 is to-be-completely-erased data in accordance with the degree of significance and/or one or more attributes of the to-be-written data 62. The to-be-written data 62 is given a flag indicating that the data 62 is to-be-completely-erased data, degree-of-significance information indicating the degree of significance of the data 62, and attribute information indicating one or more attributes of the data 62. By reading the information, the CPU 11 determines whether the data 62 is to-be-completely erased. Here, to-be-completely-erased data refers to data that needs to be prevented from leakage, which is data with a high degree of significance, such as client information.

If the data 62 is to-be-completely-erased data, in step S4, the CPU 11 adds "to-be-completely-erased information" 61 to the data 62, as illustrated in a format diagram of FIG. 5, and sends the data 62 with the "to-be-completely-erased information" 61 to the SSD controller 14A. In step S5, the CPU 11 instructs the SSD controller 14A to write the data 62, and ends the data writing process.

FIG. 4 is a flowchart illustrating a data erasing process executed by the SSD controller 14A illustrated in FIGs. 1 and 2.

In step S11 of FIG. 4, it is determined whether the SSD controller 14A is instructed by the CPU 11 to erase data 62. If the determination is YES, the process proceeds to step S11A; and if the determination is NO, the process returns to step S11. In the processing in step S11, when a user gives an instruction to erase data 62 using the operation unit 20, the CPU 11 instructs the SSD controller 14A to erase the data 62. The CPU 11 may also instruct the SSD controller 14A to erase data 62 when the capacity of data stored on the flash memory 14B exceeds a certain amount or when a certain period of time elapses.

In step S11A, it is determined whether the erasing mode is the normal erasing mode. If the determination is YES, the process proceeds to step S 19; and if the determination is NO, the process proceeds to step S12. In step S11A, the SSD controller 14A determines whether the erasing mode is the normal erasing mode by reading the setting information stored on the flash memory 14B. This erasing mode determination may alternatively be performed by the CPU 11. In this case, the setting information is stored on the RAM 13 and/or the ROM 12, and the CPU 11 determines which of the erasing modes is set. Note that the user can set in advance the erasing mode as setting information by operating the operation unit 20. In doing so, it is determined whether the data 62 is to be completely erased.

Furthermore in step S12, the SSD controller 14A determines whether the "to-be-completely-erased information" 61 is added to the data 62. If the determination is YES, the process proceeds to step S13; and if the determination is NO, the process proceeds to step S19.

In step S 13, the SSD controller 14A determines whether the "immediate complete erasing mode" has been set, as a result of determining the erasing mode in step S11A. If the determination is YES, the process proceeds to step S 14; and if the determination is NO, the process proceeds to step S16. In step S14, the to-be-completely-erased data cumulative amount AD is reset to zero. In step S15, processing in the immediate complete erasing mode is executed by completely erasing certain data stored on the flash memory 14B on the basis of the "to-be-completely-erased information" 61, which is management information of the data 62 to be completely erased. That is, the SSD controller 14A erases data itself on the memory medium of the flash memory 14B, and also erases the data destination (management information) indicated by the file system. The data erasing process ends.

In step S16, it is determined that the "block complete erasing mode" has been set, the data amount AMD of to-be-completely-erased data this time is added to the to-be-completely-erased data cumulative amount AD, and the added result serves as the to-be-completely-erased data cumulative amount AD. In step S 17, it is determined whether the to-be-completely-erased data cumulative amount AD is greater than or equal to a certain threshold ADth (such as 1 GB). If the determination is YES, the process proceeds to steps S14 and S 15, and the data 62 is completely erased; and if the determination is NO, the process proceeds to step S18. In step S18, the "to-be-completely-erased information" 61, which is management information of the to-be-completely-erased data 62, is accumulated, and the data erasing process ends.

In step S 19, the SSD controller 14A determines that the "to-be-completely-erased information" 61 is not added to the data 62, and the data 62 is not to be completely erased data. The SSD controller 14A erases management information of the to-be-erased data 62, thereby executing processing in the normal erasing mode, and the data erasing process ends.

As has been described above, according to the MFP 1 according to the embodiment, in the case of completely erasing data on the SSD 14, it is determined whether the data is to-be-completely-erased data. When the data is to-be-completely-erased data, the data is completely erased. When the data is not to-be-completely-erased data, a normal erasing process is executed, thereby extending the life of the flash memory 14B and suppressing reduction of the system performance. Since whether to execute complete erasing is set for each item of data, it is not necessary to secure in advance a to-be-erased area. This results in enhanced efficiency of area usage and prevention of the waste of areas.

Furthermore, the setting of the block complete erasing mode enables complete erasing of a block of a data amount greater than or equal to a certain threshold ADth. The certain threshold ADth is set in advance by a designer or the like, and stored in any desired memory to be referred by the CPU 11 or the SSD controller 14A.

The above embodiment discusses writing of data to and erasing of data from the SSD 14 in the MFP 1. However, the present invention is not limited to this embodiment and is applicable to writing of data to and erasing of data from an SSD in an electronic device such as a personal computer, a tablet terminal, a mobile phone, and a smart phone.

More specifically, examples of the electronic device include, but not limited to, image forming apparatuses such as a printer, copier, multifunctional peripheral (MFP), scanner, facsimile, office equipment such as an electronic whiteboard and a projector, tablet, mobile phone, smart phone, personal digital assistant (PDA), wearable computer, camera, note PC, desktop PC, and workstation PC.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An electronic device (1) comprising:
a solid state drive (SSD) (14) including a memory (14B) and a first controller (14A), the first controller being an SSD controller that controls the SSD; and
a second controller (11) configured to control operation of the electronic device,
wherein, in response to an instruction for writing data in the memory (14B) of the SSD (14), the second controller (11) determines whether the data is to be erased by executing a complete erasing process instead of a normal erasing process, and
based on a determination indicating that the data is to be erased by the complete erasing process, the second controller (11) adds to-be-completely-erased information to the data and instructs the first controller (14A) to write the data added with the to-be-completely-erased information in the memory (14B) of the SSD (14),
wherein, in response to an instruction for erasing data from the memory (14B) of the SSD (14), the first controller (14A) determines whether the data is added with to-be-completely-erased information, and
erases the data and management information of the data by executing the complete erasing process when the data is added with the to-be-completely-erased information, and
erases the management information of the data by executing the normal easing process when the data is not added with the to-be-completely-erased information.

2. The electronic device (1) according to claim 1, wherein the second controller (11) determines not to add the to-be-completely-erased information to the data when a total number of times data is written to the SSD (14) exceeds a writing limit count of the SSD.

3. The electronic device according to claim 1 or 2, wherein the first controller (14A) immediately executes the complete erasing process to erase the data and the management information of the data.

4. The electronic device according to claim 1 or 2, wherein the first controller (14A) determines whether accumulated data in the memory (14B) of the SSD (14) has a data size equal to or greater than a predetermined data size, and executes the complete erasing process to erase the accumulated data and management information of the accumulated data based on a determination indicating that the accumulated data in the memory (14B) of the SSD (14) has a data size equal to or greater than the predetermined data size.

5. A method for controlling an electronic device, the electronic device including a solid state drive (SSD) provided with a memory, the method comprising:
in response to an instruction for writing data in the memory of the SSD, determining (S3) whether the first data is to be erased by executing a complete erasing process instead of a normal erasing process;
based on a determination indicating that the data is to be erased by the complete erasing process, adding (S4) to-be-completely-erased information to the data;
writing (S5) the first data added with the to-be-completely-erased information in the memory of the SSD;
in response to an instruction for erasing data from the memory of the SSD, determining (S12) whether the data is added with to-be-completely-erased information;
executing the complete erasing process (S 15) to erase the data and management information of the data when the data is added with the to-be-completely-erased information; and
executing the normal erasing process (S 19) to erase the management information of the data when the data is not added with the to-be-completely-erased information.

6. The method according to claim 5, further comprising:
determining not to add the to-be-completely-erased information to the data when a total number of times data is written to the SSD exceeds a writing limit count of the SSD.

7. The method according to claim 5 or 6, wherein the step of executing the complete erasing process is immediately executed.

8. The method according to claim 5 or 6, further comprising:
determining whether accumulated data in the memory of the SSD has a data size equal to or greater than a predetermined data size,
wherein the complete erasing process is executed to erase the accumulated data and management information of the accumulated data when the determining determines that the accumulated data in the memory of the SSD has a data size equal to or greater than the predetermined data size.

9. A carrier means carrying computer readable code for controlling a computer (10) to carry out the method of any one of claims 5 to 8.
